# EUROPEAN PATENT SPECIFICATION

(11) **EP 2 236 368 B1**
(45) Date of publication and mention of the grant of the patent: **08.01.2014**
(21) Application number: 09156997.0
(22) Date of filing: 31.03.2009
(51) Int. Cl.: B66F 9/075

(54) **Lift truck**
Gabelstapler
Chariot élévateur

(43) Date of publication of application: 06.10.2010
(73) Proprietor: BT Products AB, 595 81 Mjölby (SE)
(72) Inventor: Stjärnström, Tobias, 583 32 Linköping (SE)
(74) Representative: Norberg, Charlotte

(56) References cited:
- EP-A- 1 607 295
- DE-A1- 19 622 694
- DE-A1-102007 014 967
- DE-C1- 19 729 401
- JP-U- 1 087 922
- JP-U- 52 046 412
- JP-U- 62 153 294

## Description

### FIELD OF THE INVENTION

The present invention relates to a lift truck having a compartment for housing a battery pack tray adapted to accommodate a battery pack, said compartment comprising at least one opening for loading and unloading the battery pack tray into and out of the compartment, a change table having a plurality of rollers for supporting the battery pack tray and for facilitating said loading and unloading, at least one locking arrangement for keeping the battery pack tray within the compartment when supported by the rollers during operation of the lift truck.

### BACKGROUND OF THE INVENTION

Battery-driven lift trucks are commonly used for handling material. In order to be able to utilize the lift truck to the full, for example shift working; it must be possible to replace a discharged battery pack with a fully-charged battery pack. To facilitate this replacement, the battery pack compartment of the lift truck is provided with a battery change table comprising rollers. The battery pack which is accommodated in a battery pack tray is placed on the battery change table in such a way that the tray with a discharged battery pack can be rolled off the lift truck and a new tray with a fully-charged battery pack can be rolled onto the battery change table.

Since the battery pack tray rests on rollers, it can become displaced within the battery compartment, e.g. when the lift truck is turning, or in a worse case scenario slide off the battery change table. To this end, barriers or cover plates covering the opening(s) of the battery compartment are frequently employed to prevent such situations.

However, barriers and cover plates only serve to confine the battery pack tray in the battery compartment. They do not prevent displacements of the battery pack tray within the battery compartment. Furthermore, they are space requiring since they add to the lift truck width. For lift trucks such as narrow aisle trucks the width is of great importance and has to be kept within stipulated widths.

JP52046412U discloses a lift truck according to the preamble of claim 1, having a locking arrangement using a holder and a sliding rod. The problem to be solved by the present invention is to provide a locking arrangement that reliably can secure the battery pack tray within the battery compartment.

### SUMMARY OF THE INVENTION

This problem is solved by means of a lift truck according to claim 1, i.e. since the locking arrangement is adapted to firmly lock the battery pack tray against movements towards the at least one opening, the battery pack tray will remain within the battery compartment during operation of the lift truck without becoming displaced.

According to a first aspect of the invention, said compartment comprises: a first and a second opening for loading and unloading the battery pack tray into and out of the compartment, said openings being arranged at opposite ends of the compartment; and a first and a second locking arrangement, whereby the first locking arrangement is adapted to prevent movements of the battery pack tray towards the first opening and the second locking arrangement is adapted to prevent movements of the battery pack tray towards the second opening. Since the battery compartment comprises a first and a second opening for flexible loading/unloading through either of the first and second openings, two locking arrangements are required to lock the battery pack tray against said movements; the first locking arrangement to prevent displacements of the battery pack tray towards the first opening and the second locking arrangement to prevent displacements towards the second opening. Accordingly, the battery pack tray will be securely locked within the compartment during operation of the lift truck.

Preferably, the first and second locking arrangements are mutually adjustable so as to admit different battery pack tray positions on the rollers in the longitudinal direction of the compartment. Hereby it is also possible to secure an effective locking even with battery tray compartments having somewhat different dimensions, since the mutual adjustment ability of the first and second locking arrangements can compensate for e.g. tolerance differences.

Advantageously, each locking arrangement is disposed within the compartment without any parts protruding through the opening. Since no parts of the locking arrangement are protruding through any of the openings of the battery compartment, the locking arrangement do not add to the width of the lift truck. Hereby, the total width of the lift truck can more easily be kept at a minimum which is of great importance concerning, e.g. very narrow aisle trucks.

According to the invention each locking arrangement comprises a holder which is fixedly attached to an inner side wall of the compartment, said inner side wall being parallel with the loading and unloading direction of the battery pack tray, wherein the holder is provided with a through hole; a slide rod which is slidably arranged within the through hole between an upper non-locking position, in which the slide rod does not interfere with a battery pack tray being loaded into the compartment and a lower locking position, in which the slide rod interferes with the battery pack tray and thereby prevents said movements towards the opening. Hereby, a simple and straightforward device having few moving parts is provided for locking the battery pack tray against movements towards any of the openings of the battery compartment.

Advantageously, an upper end of the slide rod is provided with an operator handle to facilitate manoeuvring of the slide rod between the upper and lower positions. Hereby, actuation of the locking arrangement is facilitated.

According to the invention the through hole is inclined to the vertical in such a way that a lower end of the slide rod is directed into the compartment. Hereby, the slide rod will due to the inclination of the slide rod adopt a self-locking locking position which will remain locked irrespective of vibrations, i.e. the battery pack tray is not able to lift the slide rod out of the locking position, since it is located on horizontal rollers and thereby only can perform horizontal movements.

Preferably, the battery pack tray further comprises a rim protruding from and extending along a longitudinal upper edge of the battery pack tray, and wherein the lower end of the slide rod is provided with a projection adapted to abut against a side edge of the rim when the slide rod adopts the locking position. Hereby, a suitable way of achieving a secure locking of the battery pack tray is achieved.

Suitably, the projection is provided with a vertical surface adapted to abut against a corresponding vertical surface of the side edge of the rim. Hereby, the self-locking ability is even more improved.

According to a second aspect of the invention, said compartment consists of only one opening for loading and unloading the battery pack tray into and out of the compartment, and comprises one locking arrangement adapted to admit incremental movements of the battery pack tray away from the opening and as a consequence of such movements adjust itself so as to prevent corresponding reverse incremental movements of the battery pack tray towards the opening. Since the compartment consists of only one opening for loading and unloading the battery pack tray only one locking arrangement is required for preventing the battery pack to become displaced towards the opening. Moreover, due to the self-adjustability of the locking arrangement the battery pack tray is allowed to become displaced further into the compartment, but not towards the opening once it has been displaced into the compartment. Such displacement away from the opening is however desired since the slide rod being slidably arranged within the through hole of the holder only acts under the influence of gravity and if the battery pack tray is displaced further away from the opening, the slide rod will due to gravity descend further down within the through hole until it adopts a new locking position.

### BRIEF DESCRIPTION OF THE DRAWINGS

The present invention will now be described with reference to accompanying drawings, on which:
Fig. 1 shows a perspective view of part of a lift truck,
Fig. 2a-b show perspective views of a locking arrangement in a disassembled state,
Fig. 3-4 show a perspective and a rear view of an initial stage of battery pack unloading,
Fig. 5 shows a rear top view of a later stage of the battery pack unloading,
Fig. 6 shows a perspective view of the lift truck when battery pack unloading is completed and the battery compartment is empty.

### DETAILED DESCRIPTION OF PREFERRED EMBODIMENTS

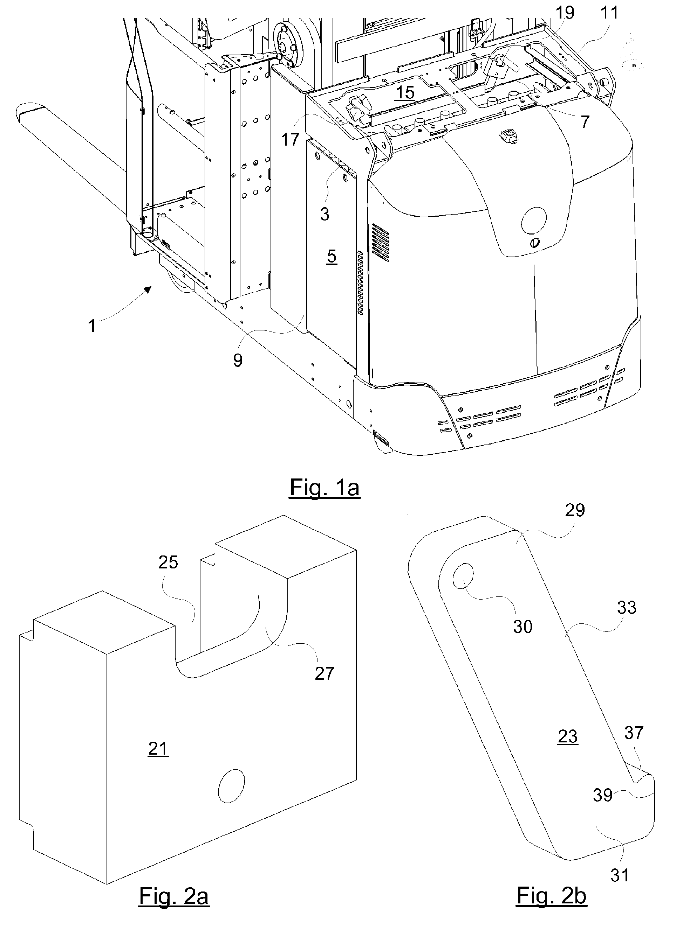

With reference to the drawings, fig. 1 discloses a lift truck 1 in the form of a narrow aisle truck. The lift truck 1 is electrically driven by means of a not shown electric motor, which is supplied with energy from a battery pack 3. The battery pack is constituted of a number of battery cells which are interconnected and accommodated in a battery pack tray 5.

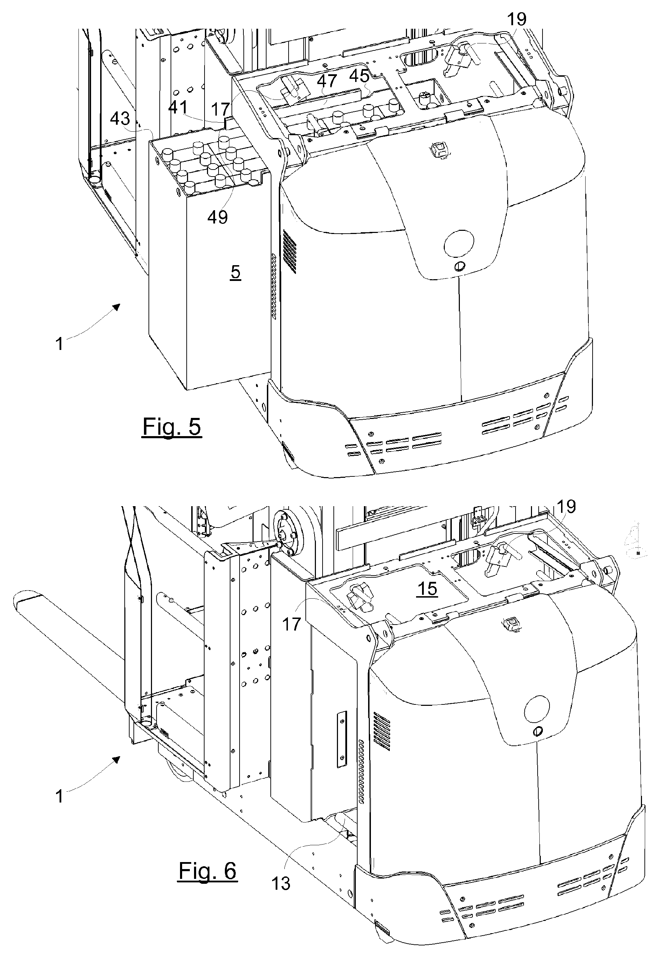

The lift truck is provided with a battery pack compartment 7 adapted to house the battery pack tray 5 and extends, in the lateral direction of the lift truck, from one long side of the lift truck to the other opposite long side of the lift truck. The battery compartment is provided with a first 9 and a second 11 opening arranged at each long side of the lift truck, i.e. forming a tunnel through the lift truck. The battery compartment 7 comprises front and rear inner side walls extending through the battery compartment from the first 9 opening to the second 11 opening. A roof portion of the battery compartment has been removed for clarity reasons. A floor portion of the battery compartment is provided with a change table 13 in the form of a plurality of rollers 13 (see fig. 6), which are arranged in parallel and each extend in the longitudinal direction of the lift truck 1. By means of the rollers 13 the battery pack tray can easily roll on as well as roll off the change table 13 during loading and unloading of a battery pack 5. When fully inserted into the compartment the battery pack 5 does not add to the lift truck width, but is fully accommodated within the compartment 7. The first 9 and second 11 openings are not provided with any cover plates, but the short sides of the battery pack tray will be exposed to the surroundings during use of the lift truck.

As seen in fig. 1, and figs. 3-6, a front inner side wall 15 of the battery compartment is provided with a first 17 and a second 19 locking arrangement. These locking arrangements serve to lock the battery pack tray 5 within the battery compartment during operation of the lift truck.

Fig. 2a-b shows the constituent parts of the first 17 and second 19 locking arrangements, i.e. a holder 21 and a slide rod 23. The holder is a substantially rectangular piece of metal being provided with a milled-out elongated cavity 25 in one of its surfaces and extends across the whole surface. The holder is adapted to be fastened to the front inner side wall 15 of the battery compartment, e.g. by means of a screw- or welded joint. Thereby, the cavity 25 forms together with the front inner side wall 15 a through hole 25 extending from an upper side of the holder 21 to an opposite lower side. At an end of the elongated cavity the cavity is milled all the way through the holder thereby forming a seat 27 in the holder. The cross-section of the through hole is substantially rectangular, but can adopt other non-circular cross-sections.

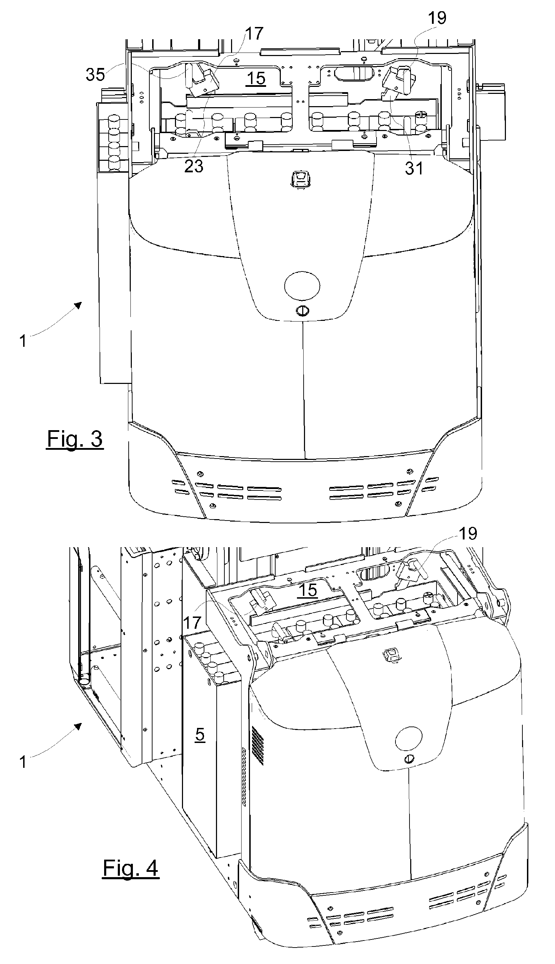

The slide rod 23 comprises an upper portion 29, a lower portion 31 and an intermediate portion 33. The intermediate portion comprises an elongated body 29 with the same cross-section as the through hole 25 of the holder 21, however with somewhat smaller dimensions so that the slide rod 23 by means of the elongated body 29 can slide within the through hole 25. The upper portion 29 of the slide rod has a bore 30 adapted for a handle 35, see fig. 3, for an operator to grip of. The lower portion 31 of the slide rod comprises a projection 37 which connects to the intermediate portion 33 but which do not fit into the through hole 25 of the holder. Accordingly, the slide rod 23 may by means of the intermediate portion 33 fit into the through hole 25 of the holder and slide between an upper position defined by the projection 37 abutting against the lower part of the holder 21, and a lower position defined by the handle 35 abutting against the seat 27 of the holder 21. Due to the non-circular shape of the intermediate portion the slide rod can only perform a linear movement within the holder and is prevented from rotating within the through hole 25.

The holders 23 of the first and second locking arrangement 17, 19 are each mounted to the inner side wall 15 of the battery compartment 7, on the same height but at different positions as seen in the transverse direction of the lift truck 1. The first holder is attached close to the first opening 9, while the second holder is attached close to the second opening 11.

When the holders 21 are attached to the inner side wall 15 of the battery compartment, the through holes 25 are positioned so that they are inclined to the vertical into the battery compartment 7. Accordingly, the slide rods 23 when positioned within the respective through hole 25 are also inclined to the vertical. The same applies for both the first and second locking arrangements 17, 19 but in a mirror-inversed fashion. Thus, both slide rods 23 are directed into the compartment 7 in a convergent manner. In this assembled state, the projections 37 of the lower portion of both the first and second locking arrangements each has a surface 39 with a normal that is parallel with the horizontal axis. This surface 39 is adapted to interact with a corresponding surface 41 of the battery pack tray 5 also having a normal which is parallel with the horizontal axis, see fig. 5.

As best seen from fig. 5, the battery pack tray 5 has a box-like shape and comprises a bottom side, two short sides, two long sides and an upper open side. The upper edges 43 of the long sides are each provided with a shallow recess 45, which extends along the long side and are centred on the long side. An intermediate area between the upper edge 43 and a bottom of the recess 45 is ramp-shaped, the inclination of which being substantially parallel with the inclination of the through hole 25. Within each recess 45 an elongated rim 47 is provided which occupy a major portion of the length of the recess 45 and being centred within the recess and leaving a recessed portion 49 between the upper edge 43 of the long side and each short side of the rim 47. The rim itself is substantially rectangular in shape and has vertical short sides, i.e. having a short side surface with a horizontal normal. Since the battery pack tray 5 is provided with the rim 47 on each long side, the battery pack tray 5 can be positioned in either of two ways within the battery compartment 7.

As shown in fig. 1 the battery pack tray 5 is fully inserted into the battery compartment 7 and the first and second locking arrangements 17, 19 have adopted their locked positions. That means that each slide rod 23 of the first and second locking arrangements adopts their lower positions. In these positions they abut, by means of their projections 37 against the side edge of the rim 47. The projection of the first locking arrangement engages with the first side edge surface, while the projection of the second locking arrangement engages with the second side edge surface of the rim 47. Since the slide rod 23 is inclined to the vertical and since the first and second side edge surfaces 41 of the rim 47 as well as the projection surfaces 39 of the slide rods are parallel and substantially vertical, as described above, any inertial reaction of the battery pack tray 5 due to a sudden turn of the lift truck during operation is prohibited. The battery pack tray 5 can not by means of the rim 47 push the slide rod 23 upwards, since no vertical force component is generated. Consequently, the battery pack tray is stuck between the first and second locking arrangements, and it is impossible for the locking arrangements to adopt their open positions without any interaction of an operator pulling the handle 35. Accordingly, the locking arrangement is self-locking.

In fig. 3-4 unloading of the battery pack tray 5 has begun. An operator has pulled the handle 35 of the first locking arrangement 17 so that the projection 37 of the slide rod 23 of the first locking arrangement 17 becomes disengaged with the side edge surface 41 of the rim 47. The battery pack tray can now be pulled farther out, which is facilitated by the rollers 13 (see fig. 6). Concerning the second locking arrangement 19, the lower portion 31 of the slide rod 23 will during this pulling motion slide up on the ramp, raising the slide rod 23 of the second locking arrangement 19 within the through hole 25 of the holder and will rest on the upper edge 43 of the battery pack tray.

In fig. 5 the battery pack tray 5 has become even more pulled out from the battery compartment 7 and the slide rod 23 of the second locking arrangement 19 no longer rests on the upper edge 43 of the battery pack compartment 7, but adopts its lower position where the handle 35 rests in the seat 27. In fig. 6 the battery pack tray 5 has been completely removed from the battery compartment 7.

In case the lift truck 1 is only provided with one opening 9 into the battery compartment 7, i.e. the other end of the battery compartment is closed with e.g. a cover plate or the like, only one locking arrangement 17 is required, since the cover plate itself will act as a stop element. In this case, the locking arrangement 17 will admit incremental movements of the battery pack tray 5 away from the opening 9, since the locking arrangement 17 only prevents movements towards the opening 9. Thus, if the battery pack tray 5 becomes displaced away from the opening, e.g. because there is a small gap between the battery pack tray and the cover plate, the locking arrangement 17 will adjust itself since the slide rod 23 will due to gravity descend farther down into the recessed portion between the rim 47 and the upper edge 43 of the battery pack tray 5, thus performing a vertical movement but also a horizontal movement towards the side edge of the rim 47 until it abuts against the rim 47 again.

## Claims

1. Lift truck (1) having a compartment (7) for housing a battery pack tray (5) adapted to accommodate a battery pack, said compartment comprising:
- at least one opening (9, 11) for loading and unloading the battery pack tray into and out of the compartment,
- a change table (13) having a plurality of rollers (13) for supporting the battery pack tray and for facilitating said loading and unloading,
- at least one locking arrangement (17, 19) for keeping the battery pack tray within the compartment when supported by the rollers during operation of the lift truck, wherein the locking arrangement (17, 19) is adapted to firmly lock the battery pack tray (5) against movements towards the at least one opening (9, 11),
wherein each locking arrangement (17, 19) comprises:
- a holder (21) which is fixedly attached to the compartment (7), wherein the holder is provided with a through hole (25),
- a slide rod (23) which is slidably arranged within the through hole (25) between an upper non-locking position, in which the slide rod (23) does not interfere with a battery pack tray (5) when loaded into the compartment (7) and a lower locking position, in which the slide rod (23) interferes with a battery pack tray (5) when loaded into the compartment thereby prevents said movements towards the opening,
**characterised in that** the holder (21) is fixedly attached to an inner side wall (15) of the compartment (7), said inner side wall being parallel with the loading and unloading direction of the battery pack tray (5), and **in that** the through hole (25) is inclined to the vertical in such a way that a lower end (31) of the slide rod (23) is directed into the compartment (7).

2. Lift truck according to claim 1, wherein said compartment comprises:
- a first and a second opening (9, 11) for loading and unloading the battery pack tray (5) into and out of the compartment (7), said openings being arranged at opposite ends of the compartment, and
- a first and a second locking arrangement (17, 19), whereby the first locking arrangement is adapted to prevent movements of the battery pack tray (5) towards the first opening (9) and the second locking arrangement (19) is adapted to prevent movements of the battery pack tray (5) towards the second opening (11).

3. Lift truck according to claims 2, wherein the first and second locking arrangements (17, 19) are mutually adjustable so as to admit different battery pack tray positions on the rollers (13) in the longitudinal direction of the compartment (7).

4. Lift truck according to claim 1, wherein said compartment consists of:
- only one opening (9) for loading and unloading the battery pack tray (5) into and out of the compartment (7), and comprises:
- a locking arrangement (17) adapted to admit incremental movements of the battery pack tray (5) away from the opening (9) and as a consequence of such movements adjust itself so as to prevent corresponding reverse incremental movements of the battery pack tray (5) towards the opening (9).

5. Lift truck according to any of claims 1-4, wherein each locking arrangement (17, 19) is disposed within the compartment (7) without any parts protruding through the opening (9, 11).

6. Lift truck according to claim 1, wherein an upper end (29) of the slide rod is provided with an operator handle (35) to facilitate manoeuvring of the slide rod (23) between the upper and lower positions.

7. Lift truck according to any of claims 1 or 6, wherein the lower end (31) of the slide rod is provided with a projection (37) adapted to abut against a side edge of a rim (47) of a battery pack tray (5), said rim protruding from and extending along a longitudinal upper edge (43) of the battery pack tray, when the slide rod adopts the locking position.

8. Lift truck according to claim 7, wherein the projection (37) is provided with a vertical surface adapted to abut against a corresponding vertical surface (39) of the side edge of the rim (47).

## Patentansprüche

1. Gabelstapler (1) mit einem Fach (7), um einen Batteriepaket-Träger (5) aufzunehmen, der angepasst ist, ein Batteriepaket aufzunehmen, wobei das Fach aufweist:
- zumindest eine Öffnung (9, 11), um den Batteriepaket-Träger in das Fach einzuladen und aus diesem auszuladen;
- einen Wechseltisch (13), der mehrere Rollen (13) aufweist, um den Batteriepaket-Träger aufzunehmen und das Einladen und Ausladen zu unterstützen,
- zumindest eine Verriegelungsanordnung (17, 19), um den Batteriepaket-Träger während des Betriebs des Gabelstaplers innerhalb des Fachs zu halten, wenn er durch die Rollen abgestützt wird, wobei die Verriegelungsanordnung (17, 19) angepasst ist, den Batteriepaket-Träger (5) fest gegen Bewegungen hin zu der zumindest einen Öffnung (9, 11) zu verriegeln, wobei jede Verriegelungsanordnung (17, 19) aufweist:
- einen Halter (21), der fest an dem Fach angebracht ist, wobei der Halter mit einem Durchgangsloch (25) versehen ist,
- einen Schiebedorn (23), der gleitbar innerhalb des Durchgangslochs (25) zwischen einer oberen, nicht verriegelnden Position, bei welcher der Schiebedorn (23) nicht mit einem Batteriepaket-Träger (5) in Wechselwirkung ist, wenn dieser in das Fach (7) eingeladen ist, und einer unteren, verriegelnden Position angeordnet ist, bei welcher der Schiebedorn (23) mit einem Batteriepaket-Träger (5) in Wechselwirkung ist, wenn dieser in das Fach eingeladen ist, und dadurch die Bewegungen hin zur Öffnung verhindert,
**dadurch gekennzeichnet, dass** der Halter (21) fest an einer inneren Seitenwand (15) des Fachs (7) angebracht ist, wobei die innere Seitenwand zu der Einlade- und Ausladerichtung des Batteriepaket-Trägers (5) parallel ist, und
das Durchgangsloch (25) zur Vertikalen derart geneigt ist, dass ein unteres Ende (31) des Schiebedorns (23) in das Fach (7) gerichtet ist.

2. Gabelstapler nach Anspruch 1, bei dem das Fach aufweist:
- eine erste und eine zweite Öffnung (9, 11), um den Batteriepaket-Träger (5) in das Fach (7) einzuladen und aus diesem auszuladen, wobei die Öffnungen an gegenüberliegenden Enden des Fachs angeordnet sind, und
- eine erste und eine zweite Verriegelungsanordnung (17, 19), wobei die erste Verriegelungsanordnung angepasst ist, Bewegungen des Batteriepaket-Trägers (5) hin zur ersten Öffnung (9) zu verhindern und die zweite Verriegelungsanordnung (19) angepasst ist, Bewegungen des Batteriepaket-Trägers (5) hin zur zweiten Öffnung (11) zu verhindern.

3. Gabelstapler nach Anspruch 2, bei dem die erste und zweite Verriegelungsanordnung (17, 19) gegeneinander derart einstellbar sind, dass sie in der Längsrichtung des Fachs (7) auf den Rollen (13) unterschiedliche Positionen des Batteriepaket-Trägers zulassen.

4. Gabelstapler nach Anspruch 1, bei dem das Fach besteht aus:
- nur einer Öffnung (9), um den Batteriepaket-Träger (5) in das Fach (7) einzuladen und aus diesem auszuladen, und aufweist:
- eine Verriegelungsanordnung (17), die angepasst ist, inkrementelle Bewegungen des Batteriepack-Trägers (5) weg von der Öffnung (9) zuzulassen und sich als eine Konsequenz derartiger Bewegungen selbst derart einzustellen, dass sie entsprechende umgekehrte inkrementelle Bewegungen des Batteriepaket-Trägers (5) hin zur Öffnung (9) verhindert.

5. Gabelstapler nach einem der Ansprüche 1 bis 4, bei dem jede Verriegelungsanordnung (17, 19) innerhalb des Fachs (7) angeordnet ist, ohne dass jedwede Teile durch die Öffnung (9, 11) ragen.

6. Gabelstapler nach Anspruch 1, bei dem ein oberes Ende (29) des Schiebedorns mit einem Betätigungsgriff (35) versehen ist, um das Bewegen des Schiebedorns (23) zwischen den oberen und unteren Positionen zu unterstützen.

7. Gabelstapler nach einem der Ansprüche 1 oder 6, bei dem das untere Ende (31) des Schiebedorns mit einem Vorsprung (37) versehen ist, der derart angepasst ist, dass er gegen eine Seitenkante eines Randes (47) eines Batteriepaket-Trägers (5) anliegt, wobei der Rand von der oberen Längskante (43) des Batteriepaket-Trägers vorsteht und sich entlang dieser erstreckt, wenn der Schiebedorn die verriegelnde Position einnimmt.

8. Gabelstapler nach Anspruch 7, bei dem der Vorsprung (37) mit einer vertikalen Fläche versehen ist, die angepasst ist, gegen eine entsprechende vertikale Fläche (39) der Seitenkante des Randes (47) anzuliegen.

## Revendications

1. Chariot élévateur (1) présentant un compartiment (7) pour l'emplacement d'un support d'ensemble de batteries (5) adapté de façon à recevoir un ensemble de batteries, ledit compartiment comprenant :
- au moins une ouverture (9, 11) pour le chargement du support d'ensemble de batteries dans le compartiment et le déchargement hors de celui-ci ;
- une table de remplacement (13) ayant une pluralité de rouleaux (13) pour le maintien du support d'ensemble de batteries et pour l'aisance dudit chargement et dudit déchargement ;
- au moins un agencement de verrouillage (17, 19) pour le maintien du support d'ensemble de batteries à l'intérieur du compartiment quand il est soutenu par les rouleaux en cours de fonctionnement du chariot élévateur, dans lequel l'agencement de verrouillage (17, 19) est adapté de façon à maintenir le support d'ensemble de batteries (5) vis-à-vis de déplacements vers l'au moins une ouverture (9, 11) ;
dans lequel chaque agencement de verrouillage (17, 19) comprend :
- un support (21) qui est fixé au compartiment (7), dans lequel le support est fourni avec un trou traversant (25) ;
- une tige coulissante (23) qui est agencée de manière coulissante dans le trou traversant (25) entre une position supérieure de non verrouillage, dans laquelle la tige coulissante (23) n'interfère pas avec un support d'ensemble de batteries (5) quand il est chargé dans le compartiment (7), et une position inférieure de verrouillage, dans laquelle la tige coulissante (23) interfère avec un support d'ensemble de batteries (5) quand il est chargé dans le compartiment, en empêchant de ce fait lesdits déplacements vers l'ouverture ;
**caractérisé en ce que** le support (21) est fixé à une paroi latérale intérieure (15) du compartiment (7), ladite paroi latérale intérieure étant parallèle à la direction du chargement et du déchargement du support d'ensemble de batteries (5), et **en ce que** le trou traversant (25) est incliné par rapport à la verticale de telle sorte qu'une extrémité inférieure (31) de la tige coulissante (23) soit dirigée dans le compartiment (7).

2. Chariot élévateur selon la revendication 1, dans lequel ledit compartiment comprend :
- des première et deuxième ouvertures (9, 11) pour le chargement du support d'ensemble de batteries (5) dans le compartiment (7) et pour le déchargement hors de celui-ci, lesdites ouvertures étant agencées au niveau des extrémités opposées du compartiment ; et
- des premier et second agencements de verrouillage (17, 19), grâce auxquels le premier agencement de verrouillage est adapté de façon à empêcher des déplacements du support d'ensemble de batteries (5) vers la première ouverture (9), et le second agencement de verrouillage (19) est adapté de façon à empêcher des déplacements du support d'ensemble de batteries (5) vers la seconde ouverture (11).

3. Chariot élévateur selon la revendication 2, dans lequel les premier et second agencements de verrouillage (17, 19) peuvent être réglés mutuellement de façon à admettre différentes positions du support d'ensemble de batteries sur les rouleaux (13) dans la direction longitudinale du compartiment (7).

4. Chariot élévateur selon la revendication 1, dans lequel ledit compartiment se compose :
- d'une seule ouverture (9) pour le chargement du support d'ensemble de batteries dans le compartiment (7) et pour le déchargement hors de celui-ci, et comprend :
- un agencement de verrouillage (17) adapté de façon à admettre des déplacements incrémentaux du support d'ensemble de batteries (5) en s'éloignant de l'ouverture (9) et, suite à de tels déplacements, à se régler lui-même de façon à empêcher des déplacements incrémentaux inverses correspondants du support d'ensemble de batteries (5) vers l'ouverture (9).

5. Chariot élévateur selon l'une quelconque des revendications 1 à 4, dans lequel chaque agencement de verrouillage (17, 19) est disposé à l'intérieur du compartiment (7) sans qu'aucune pièce ne fasse saillie à travers l'ouverture (9, 11).

6. Chariot élévateur selon la revendication 1, dans lequel une extrémité supérieure (29) de la tige coulissante est fournie d'une poignée pour opérateur (35) de façon à faciliter la manoeuvre de la tige coulissante (23) entre les positions supérieure et inférieure.

7. Chariot élévateur selon la revendication 1 ou 6, dans lequel l'extrémité inférieure (31) de la tige coulissante est fournie avec une saillie (37) adaptée de façon à venir en butée contre une tranche latérale d'un bord (47) d'un support d'ensemble de batteries (5), ledit bord faisant saillie à partir d'une tranche supérieure longitudinale (43) du support d'ensemble de batteries, et s'étendant le long de celui-ci, lorsque la tige coulissante adopte la position de verrouillage.

8. Chariot élévateur selon la revendication 7, dans lequel la saillie (37) est dotée d'une surface verticale adaptée de façon à venir en butée contre une surface verticale correspondante (39) de la tranche latérale du bord (47).
